(19) Europäisches Patentamt
European Patent Office
Office européen des brevets

(11) **EP 4 060 384 B1**

(12) **EUROPEAN PATENT SPECIFICATION**

(45) Date of publication and mention of the grant of the patent:
**28.01.2026 Bulletin 2026/05**

(21) Application number: **20901123.8**

(22) Date of filing: **07.12.2020**

(51) International Patent Classification (IPC):
***G01S 19/33*** (2010.01)   ***G01S 19/37*** (2010.01)

(52) Cooperative Patent Classification (CPC):
**G01S 19/43;** G01S 19/07; G01S 19/072

(86) International application number:
**PCT/CN2020/134222**

(87) International publication number:
**WO 2021/121062 (24.06.2021 Gazette 2021/25)**

(54) **CLOUD-END" ARCHITECTURE-BASED PPP-RTK ENHANCEMENT METHOD AND SYSTEM**

CLOUD-END-ARCHITEKTUR-BASIERTES PPP-RTK-VERBESSERUNGSVERFAHREN UND -SYSTEM

PROCÉDÉ ET SYSTÈME D'AMÉLIORATION PPP-RTK FONDÉE SUR UNE ARCHITECTURE "CÔTÉ NUAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.12.2019 CN 201911329284**

(43) Date of publication of application:
**21.09.2022 Bulletin 2022/38**

(73) Proprietor: **Xi'an Institute Of Space Radio Technology**
**Xi'an, Shaanxi 710199 (CN)**

(72) Inventors:
• **MENG, Yansong**
**Xi An City, Shaanxi 710199 (CN)**
• **BIAN, Lang**
**Xi An City, Shaanxi 710199 (CN)**
• **TIAN, Ye**
**Xi An City, Shaanxi 710199 (CN)**

• **WANG, Ying**
**Xi An City, Shaanxi 710199 (CN)**
• **YAN, Tao**
**Xi An City, Shaanxi 710199 (CN)**
• **JIA, Yizhe**
**Xi An City, Shaanxi 710199 (CN)**
• **HAN, Lin**
**Xi An City, Shaanxi 710199 (CN)**

(74) Representative: **Rooney, John-Paul**
**Withers & Rogers LLP**
**2 London Bridge**
**London SE1 9RA (GB)**

(56) References cited:
WO-A1-2019/233039  CN-A- 106 855 632
CN-A- 107 076 856  CN-A- 110 501 733
CN-A- 111 045 042  JP-A- 2007 170 900
US-A1- 2017 276 793  US-A1- 2017 307 761

## Description

The present application claims priority to Chinese Patent Application No.201911329284.8, titled "CLOUD-END" ARCHITECTURE-BASED PPP-RTK AUGMENTATION METHOD AND SYSTEM", filed on December 20, 2019 with the Chinese Patent Office.

## FIELD

The present disclosure relates to the field of satellite navigation augmentation, and in particular to a system and a method for improving performance of precise point positioning.

## BACKGROUND

In the development of the precise point positioning (PPP) technology, the conventional floating-point solution PPP technology has a long first convergence time. According to a subsequent fixed solution PPP technology, although positioning accuracy is improved to a certain extent and the first convergence time is shortened, the first convergence time according to the fixed solution PPP technology is still about ten minutes even based on observation data from multiple systems, and convergence time required after a signal loses lock is almost the same as the first convergence time. The positioning performance of the above technologies is unacceptable for an application requiring real-time, high-precision and high dynamic. Therefore, a global navigation augmentation system based on an LEO (low earth orbit) constellation becomes a research hotspot in the field of satellite navigation. In recent years, the LEO communication constellation technology is rapidly developed. The number of constellations, such as Starlink, Oneweb and Hongyan, proposed by domestic and foreign companies reaches hundreds to more than ten thousands. The research on accelerating PPP convergence by using BeiDou/GNSS based on LEO satellites is gradually performed.

In performing PPP by using BeiDou/GNSS based on LEO satellites, in a dual-frequency or multi-frequency positioning model, in addition to estimating an ambiguity parameter, it is further required to estimate space correction parameters such as a tropospheric delay and an ionospheric delay, which are main factors restricting PPP instantaneous convergence of augmented BeiDou/GNSS based on LEO satellites. Moreover, in a case that the number of LEO satellites is small, PPP instantaneous convergence cannot be achieved by using the augmented BeiDou/GNSS based on LEO satellites. The main reason for the above problem is that the space parameter is unknown, resulting in affecting convergence of a final positioning equation. To solve the above problem, a PPP- RTK (Real Time Kinematic) system is currently adopted. With the system, a large number of monitoring stations are arranged on the ground with an arranging density of about 30 to 80 kilometers, then space information in regions is monitored and corrected space information is broadcasted to accelerate PPP convergence of the users. Although a good effect on accelerating PPP convergence of the users based on PPP-RTK can be achieved, a large number of monitoring stations are required to be set up on the ground to achieve a wide-area PPP-RTK service, which is costly and difficult to achieve global coverage. The patent US20170307761A1 provides a method of determination by a computer server of errors in calculating a position calculated by user receivers of positioning signals received from at least one constellation of satellites in a determined geographical zone. The method includes: determining a list of contributing receivers of positioning signals situated in said geographical zone, a position of said contributing receivers not being known a priori; extracting, for each of the contributing receivers, code and phase data of at least one channel of the contributing receiver; calculating an atmospheric error applicable to each contributing receiver on the basis of said code and phase data; calculating an atmospheric error applicable in the zone, on the basis of the errors applicable to the contributing receivers.

## SUMMARY

A "cloud-end" architecture-based PPP-RTK augmentation system and method are provided according to the present disclosure, to further shorten positioning convergence time of augmented BeiDou/GNSS based on LEO satellites and avoid establishing a large number of stations around the world. A global PPP-RTK service is achieved through continuous intelligent evolution by a large number of users, so as to further shorten PPP convergence time after the augmented BeiDou/GNSS PPP based on LEO satellites.

According to the technical solutions of the present disclosure, a "cloud-end" architecture-based PPP-RTK augmentation method is provided. The method includes:

step (1), performing, by a user end among a large number of user ends around the world based on a satellite navigation system, point positioning, and obtaining, by the user end after the point positioning is converged, information about the position of the user end, and an ionospheric delay and a tropospheric delay corresponding to the position;

step (2), uploading, by the user end among the large number of user ends via a communication link, the information about the position of the user end, and the ionospheric delay and the tropospheric delay corresponding to the position to a "cloud" as space correction information;

step (3), performing, by the "cloud" based on the space correction information from the large number of user ends, interpolation to generate gridded space correction information;

step (4), broadcasting, by the "cloud" by using an LEO satellite, the gridded space correction information generated by the "cloud" to user ends in a region corresponding to the LEO satellite;

step (5), updating, by the user end among the large number of user ends based on the broadcasted space correction information, information about the position of the user end, and uploading, by the user end after the point positioning is converged, the updated space correction information of the position to the "cloud" via a communication link; and

step (6), repeating steps (3) to (5), to achieve high-precision gridded correction information at the "cloud" through intelligent evolution based on the large number of user ends.

The ionospheric delay is obtained by using the following equation:

$$I_{r,j}^{s} = \rho_{r,g}^{s} - L_{r,j}^{s} + T_{r}^{s} + \lambda_{j}(f_{r,j} - f_{j}^{s} + N_{r,j}^{s}) + \varepsilon_{r,j}^{s}$$

where, $I_{r,j}^{s}$ represents an ionospheric delay at a frequency, $\rho_{r,g}^{s}$ represents a distance between a satellite and a user end where the distance has been corrected for an antenna phase center, an antenna phase center variation, an earth rotation and a relativistic effect, $L_{r,j}^{s}$ represents a carrier phase observation value, $T_{r}^{s}$ represents a tropospheric delay, $\lambda_{j}$ represents a wavelength of an electromagnetic wave $j$, $f_{r,j}$ represents a carrier phase hardware deviation of a receiver, $f_{j}^{s}$ represents a carrier phase hardware deviation of a satellite, $N_{r,j}^{s}$ represents an ambiguity, and $\varepsilon_{r,j}^{s}$ represents a carrier phase measurement error.

The tropospheric delay is obtained by using the following equation:

$$T_{i}^{k} = L_{3i}^{k} - \rho_{i,g}^{k} - \lambda_{j}\left(f_{r,j} - f_{j}^{s} + N_{r,j}^{s}\right) - \varepsilon_{r,j}^{s}$$

where, $T_{i}^{k}$ represents a tropospheric delay, $L_{3i}^{k}$ represents a dual-frequency ionosphere-free carrier phase observation value, $\rho_{r,g}^{s}$ represents a distance between a satellite and a user end where the distance has been corrected for an antenna phase center, an antenna phase center variation, an earth rotation and a relativistic effect, $\lambda_{j}$ represents a wavelength of an electromagnetic wave $j$, $f_{r,j}$ represents a carrier phase hardware deviation of a receiver, $f_{j}^{s}$ represents a carrier phase hardware deviation of a satellite, $N_{r,j}^{s}$ represents an ambiguity, and $\varepsilon_{r,j}^{s}$ represents a carrier phase measurement error.

The performing, by the "cloud", interpolation to generate gridded space correction information includes calculating an interpolation coefficient by using the following equation:

$$\sum_{i=1}^{n}\alpha_{i} = 1, \sum_{i=1}^{n}\alpha_{i}(\hat{X}_{u} - \hat{X}_{i}) = 0, \sum_{i=1}^{n}\alpha_{i}^{2} = Min$$

where, $n$ represents the number of the users, $\alpha_{i}$ represents the interpolation coefficient, a subscript $u$ represents a user point before gridding, a subscript $i$ represents the user point after gridding, and $X$ represents a coordinate in a local plane coordinate system.

The "cloud" is a cloud platform that is constructed for data interconnection and data intercommunication and includes an LEO, a navigation constellation and a ground processing system.

The communication link in step (2) is a satellite communication link, a global short message link or a terrestrial network link.

A "cloud-end" architecture-based PPP-RTK augmentation system is provided according to the present disclosure. The system includes a user end, an LEO constellation, a navigation constellation and a cloud service platform. The user end is configured to: perform point positioning by using the navigation constellation; obtain information about a position of the user end, and an ionospheric delay and a tropospheric delay corresponding to the position; transmit the information about the position, the ionospheric delay and the tropospheric delay to the cloud service platform; update the information about the position of the user end based on updated space correction information; and obtain space correction information corresponding to a new position, and upload the space correction information to the cloud service platform. The cloud service platform is configured to: perform interpolation based on a large amount of space correction information to generate gridded space correction information, and broadcast, by using the LEO constellation, the gridded space correction information to user ends in a region corresponding to the LEO constellation.

Compared with the conventional technology, the present disclosure has the following advantages.

Compared with the conventional PPP-RTK service, according to the present disclosure, a large number of users worldwide perform PPP, and space correction information obtained by the large number of users based on positions is intelligently processed, avoiding establishing stations worldwide and achieving a global PPP-RTK service based on the large number of users.

Compared with the conventional "cloud-end" server with which performance can only be upgraded after updating the system, an intelligently evolved "cloud-end" is provided according to the present disclosure which is continuously and intelligently evolved with the increase of the access user ends, thereby improving the service capacity of the system.

## BRIEF DESCRIPTION OF THE DRAWINGS

Figure 1 is a schematic diagram of a method according to the present disclosure;
Figure 2 is a flow chart of a method according to the present disclosure; and
Figure 3 is a schematic diagram of a "cloud" processing result according to the present disclosure.

## DETAILED DESCRIPTION

Based on PPP-RTK, according to the present disclosure, a large number of PPP users who have accurately estimated their own positions transmit space correction information estimated based on positions to a "cloud-end" formed by LEO satellites via two-way communication links (such as satellite communication links, global short message links or terrestrial network links), then the "cloud-end" performs space modeling to generate a space correction model and a space correction parameter and broadcasts the space correction model and the space correction parameter to the users by using the LEO satellites. Based on the broadcasted space correction model and the space correction parameter, the users may further shorten an initialization time of precise point positioning of the augmented BeiDou/GNSS based on LEO satellites.

In the present disclosure, "cloud" refers to a platform (mainly including an LEO constellation, a navigation constellation and a ground processing system) for performing space-earth integration data sharing by means of various communication links, and "end" refers to a large number of high-precision user ends.

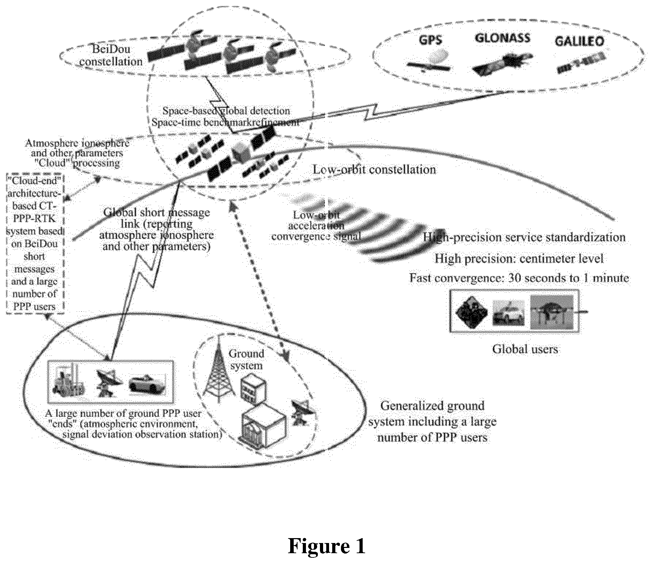

Reference is made to Figure 1, which is a schematic diagram of a method according to the present disclosure. A large number of high-precision users around the world perform BeiDou/GNSS PPP. After the BeiDou/GNSS PPP is accurately converged, the users generate space correction information (mainly including correction information of a tropospheric delay and an ionospheric delay) based on the positions of the users. After generating space correction information based on the positions of the users, the large number of users upload the space correction information to the "cloud" through various communication manners (such as through BeiDou short messages). The "cloud" intelligently processes the space correction information from the large number of users, generates a space correction model and a space correction parameter, and broadcasts, by using an LEO satellite, space correction information to users corresponding to the LEO satellite. The users perform PPP based on the broadcasted correction information, and upload updated space correction information to the "cloud". In this way, a global PPP-RTK service is realized through intelligent evolution of the large number of users.

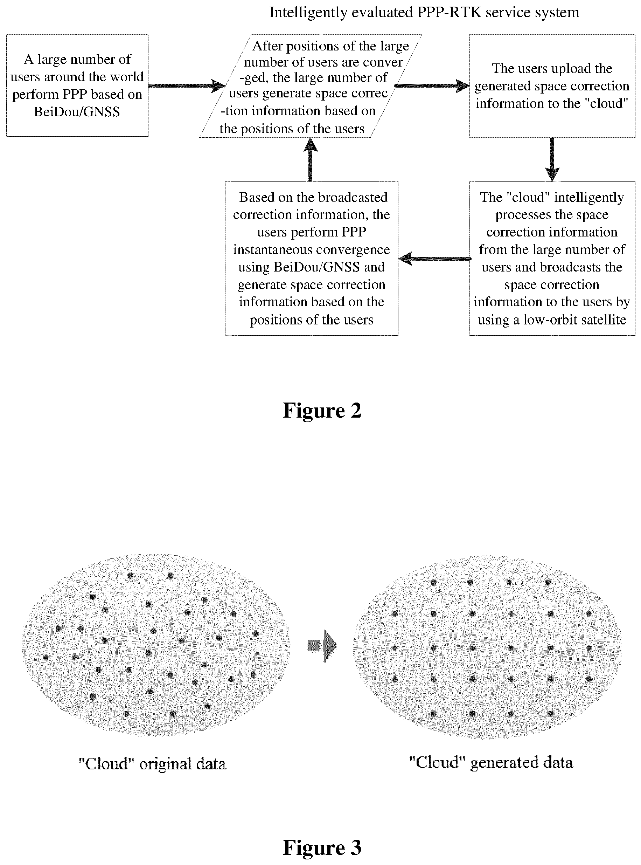

Reference is made to Figure 2, which is a flow chart of a method according to the present disclosure. The method includes the following steps 1 to 4.

In step 1, a large number of high-precision users around the world perform BeiDou/GNSS PPP.

For a user among the large number of high-precision users around the world, in performing BeiDou/GNSS PPP, the user performs positioning based on observation values by a receiver. An pseudorange observation value equation and a carrier phase observation value equation may be respectively expressed as:

$$P_{r,j}^{s} = \rho_{r,g}^{s} - t^{s} + t_{r} + I_{r,j}^{s} + T_{r}^{s} + c(d_{r,j} - d_{j}^{s}) + e_{r,j}^{s}$$

$$L_{r,j}^{s} = \rho_{r,g}^{s} - t^{s} + t_{r} + I_{r,j}^{s} + T_{r}^{s} + \lambda_{j}(f_{r,j} - f_{j}^{s} + N_{r,j}^{s}) + \varepsilon_{r,j}^{s}$$

where $P_{r,j}^s$ represents the pseudorange observation value, $L_{r,j}^s$ represents the carrier phase observation value, $\rho_{r,g}^s$ represents a distance between a satellite and a user where the distance has been corrected for an antenna phase center, an antenna phase center variation, an earth rotation and a relativistic effect, $t^s$ represents a clock difference of the satellite, $t_r$ represents a clock difference of the receiver, $I_{r,j}^s$ represents an ionospheric delay at a frequency, $T_r^s$ represents a tropospheric delay, $c$ represents the speed of light, $d_{r,j}$ represents a pseudorange hardware delay of the receiver, $d_j^s$ represents a pseudorange hardware delay of the satellite, $e_{r,j}^s$ represents a pseudorange measurement error, $\lambda_j$ represents a wavelength of an electromagnetic wave $j$, $f_{r,j}$ represents a carrier phase hardware deviation of the receiver, $f_j^s$ represents a carrier phase hardware deviation of the satellite, $N_{r,j}^s$ represents an ambiguity, and $\varepsilon_{r,j}^s$ represents a carrier phase measurement error.

The users perform Kalman filtering based on the observation value equations and various correction models (that are general models in PPP), obtain accurate coordinates by performing observation value accumulation and position convergence for a time period, and calculate a high-precision and error-free ionospheric delay corresponding to each of observation values based on the accurate coordinates and the observation values by using the following equation:

$$I_{r,j}^s = \rho_{r,g}^s - L_{r,j}^s + T_r^s + \lambda_j(f_{r,j} - f_j^s + N_{r,j}^s) + \varepsilon_{r,j}^s$$

In the above equation, $L_{r,j}^s$ may represent a combined wavelength. The meanings of other symbols are the same as the meanings of the symbols described above. A decimal deviation of a wide lane and a decimal deviation of a narrow lane may affect the estimation of the ionospheric delay. However, due to that an ionospheric deviation caused by the decimal deviation of the wide lane and the decimal deviation of the narrow lane is a systematic deviation and does not affect ionospheric modeling in a space domain, the ionospheric deviation may be completely ignored in a case that the system end and the user ends perform same processing. Similarly, a tropospheric delay at each of the user ends may be obtained based on the accurate coordinates and the observation values by the following equation:

$$T_i^k = L_{3i}^k - \rho_{i,g}^k - \lambda_j\left(f_{r,j} - f_j^s\right) - \lambda_j N_{r,j}^s - \varepsilon_{r,j}^s$$

where, $f$ represents calculated decimal deviations of the satellite and the receiver, $T_i^k$ represents the tropospheric delay, $L_{3i}^k$ represents a dual-frequency ionosphere-free carrier phase observation value, $\rho_{i,g}^k$ represents the distance between the satellite and the user where the distance has been corrected for the antenna phase center, the antenna phase center variation, the earth rotation and the relativistic effect, $\lambda_j$ represents the wavelength of the electromagnetic wave $j$, $f_{r,j}$ represents the carrier phase hardware deviation of the receiver, $f_j^s$ represents the carrier phase hardware deviation of the satellite, $N_{r,j}^s$ represents the ambiguity, and $\varepsilon_{r,j}^s$ represents the carrier phase measurement error.

In step 2, the large number of users upload the space correction information generated based on the positions of the users to the "cloud-end" through manners such as BeiDou short messages.

In the step 1, after obtaining accurate positions of the users by performing PPP, the large number of users calculate, by using the equations and principle described in step 1 based on the positions of the users, the space correction information. In the step 2, the large number of users upload the space correction information and coordinates of the positions of the users to the "cloud-end".

The "cloud" herein is a cloud platform that is constructed for data interconnection and data intercommunication and includes an LEO constellation, a navigation constellation, and a ground processing system.

In step 3, the "cloud" intelligently processes the space correction information from the large number of users, and broadcasts the space correction information to the users by using an LEO satellite.

In the step 2, a large amount of information is uploaded to the "cloud". In step 3, the large amount of information is uniformly and intelligently processed.

The "cloud" performs precise interpolation on the space correction information, uploaded by the large number of users and based on positions, to generate gridded space correction information. The original information of the large number of positions is messy and disordered. In a case of directly broadcasting the original information without processing, pressure on the downlink is increased. For each of gridded points, interpolation is performed based on the original information. The above operation is repeatedly performed to generate gridded information. Figure 3 is a schematic diagram showing the interpolation process. An interpolation coefficient in the interpolation process is calculated by using the following equations:

$$\sum_{i=1}^{n} \alpha_i = 1, \sum_{i=1}^{n} \alpha_i (\hat{X}_u - \hat{X}_i) = 0, \sum_{i=1}^{n} \alpha_i^2 = Min$$

where $n$ represents the number of the users, $\alpha_i$ represents the interpolation coefficient, subscripts $u$ and $i$ respectively represent a gridded point and one of the large number of users, X represents a coordinate in a local plane coordinate system, and Min is set to ensure a minimum interpolation coefficient, that is, to ensure a minimum distance between an interpolated point and a known point.

Non-differential space correction information is generated epoch by epoch by using the above equations. In order to avoid affecting the real-time performance of positioning due to a delay in transmitting the information, it is required to perform short-term forecast on the gridded space correction information after interpolation. After processing the gridded space correction information, the "cloud-end" broadcasts the gridded space correction information by using an LEO satellite to users in a region corresponding to the LEO satellite.

In step 4, the "cloud-end" performs intelligent evolution to realize a global PPP-RTK service.

After performing positioning based on the space correction information broadcasted by the LEO satellite, the user ends access the "cloud" and upload space correction information based on positions of the user ends to the "cloud". The "cloud" intelligently processes the large amounts of information. More users access the "cloud" indicates that more accurate gridded space correction information is to be generated. Therefore, an intelligent evolution "cloud-end" system is formed.

Contents not described in detail in the description of the present disclosure are technologies well known to those skilled in the art.

**Claims**

1. A "cloud-end" architecture-based Precise Point Positioning - Real Time Kinematic PPP-RTK augmentation method, comprising:

   step (1), performing, by a user end among a large number of user ends around the world based on a satellite navigation system, point positioning, and obtaining, by the user end after the point positioning is converged, information about the position of the user end, and an ionospheric delay and a tropospheric delay corresponding to the position;
   step (2), uploading, by the user end among the large number of user ends via a communication link, the information about the position of the user end, and the ionospheric delay and the tropospheric delay corresponding to the position to a "cloud" as space correction information;
   step (3), performing, by the "cloud" based on the space correction information from the large number of user ends, interpolation to generate gridded space correction information;
   step (4), broadcasting, by the "cloud" by using an LEO (low earth orbit) satellite, the gridded space correction information generated by the "cloud" to user ends in a region corresponding to the LEO satellite;
   step (5), updating, by the user end among the large number of user ends based on the broadcasted space correction information, information about the position of the user end, and uploading, by the user end after the point positioning is converged, the updated space correction information of the position to the "cloud" via a communication link; and
   step (6), repeating steps (3) to (5), to achieve high-precision gridded correction information at the "cloud" through intelligent evolution based on the large number of user ends;
   wherein the ionospheric delay is obtained by using the following equation:

$$I_{r,j}^{s} = \rho_{r,g}^{s} - L_{r,j}^{s} + T_{r}^{s} + \lambda_j (f_{r,j} - f_j^{s} + N_{r,j}^{s}) + \varepsilon_{r,j}^{s}$$

   where, $I_{r,j}^{s}$ represents the ionospheric delay at a frequency, $\rho_{r,g}^{s}$ represents a distance between a satellite and a user end where the distance has been corrected for an antenna phase center, an antenna phase center variation value, an earth rotation and a relativistic effect, $L_{r,j}^{s}$ represents a carrier phase observation value, $T_{r}^{s}$ represents a tropospheric delay, $\lambda_j$ represents a wavelength of an electromagnetic wave $j$, $f_{r,j}$ represents a carrier phase hardware deviation of a receiver, $f_j^s$ represents a carrier phase hardware deviation of the satellite, $N_{r,j}^s$ represents an ambiguity, and $\varepsilon_{r,j}^s$ represents a carrier phase measurement error.

2. The "cloud-end" architecture-based PPP-RTK augmentation method according to claim 1, wherein the tropospheric delay is obtained by using the following equation:

$$T_i^k = L_{3i}^k - \rho_{i,g}^k - \lambda_j \left( f_{r,j} - f_j^s + N_{r,j}^s \right) - \varepsilon_{r,j}^s$$

where, $T_i^k$ represents the tropospheric delay, $L_{3i}^k$ represents a dual-frequency ionosphere-free carrier phase observation value, $\rho_{r,g}^s$ represents a distance between a satellite and a user end where the distance has been corrected for an antenna phase center, an antenna phase center variation, an earth rotation and a relativistic effect, $\lambda_j$ represents a wavelength of an electromagnetic wave $j$, $f_{r,j}$ represents a carrier phase hardware deviation of a receiver, $f_j^s$ represents a carrier phase hardware deviation of the satellite, $N_{r,j}^s$ represents an ambiguity, and $\varepsilon_{r,j}^s$ represents a carrier phase measurement error.

3. The "cloud-end" architecture-based PPP-RTK augmentation method according to claim 1, wherein the performing, by the "cloud", interpolation to generate gridded space correction information comprises:

calculating an interpolation coefficient by using the following equations:

$$\sum_{i=1}^n \alpha_i = 1, \sum_{i=1}^n \alpha_i (\hat{X}_u - \hat{X}_i) = 0, \sum_{i=1}^n \alpha_i^2 = Min$$

where, $n$ represents the number of the user ends, $\alpha_i$ represents the interpolation coefficient, a subscript $u$ represents a user point before gridding, a subscript $i$ represents the user point after gridding, and $X$ represents a coordinate in a local plane coordinate system.

4. The "cloud-end" architecture-based PPP-RTK augmentation method according to claim 1, wherein the "cloud" is a cloud platform that is constructed for data interconnection and data intercommunication and comprises an LEO constellation, a navigation constellation and a ground processing system.

5. The "cloud-end" architecture-based PPP-RTK augmentation method according to claim 1, wherein the communication link in step (2) is a satellite communication link, a global short message link or a terrestrial network link.

6. A "cloud-end" architecture-based PPP-RTK augmentation system, comprising an user end, an LEO constellation, a navigation constellation and a cloud service platform, wherein

the user end is configured to: perform point positioning by using the navigation constellation; obtain information about a position of the user end, and an ionospheric delay and a tropospheric delay corresponding to the position; transmit the information about the position, the ionospheric delay and the tropospheric delay to the cloud service platform; update the information about the position of the user end based on updated space correction information; and obtain space correction information corresponding to a new position, and upload the space correction information to the cloud service platform; and
the cloud service platform is configured to: perform interpolation based on a large amount of space correction information to generate gridded space correction information, and broadcast, by using the LEO constellation, the gridded space correction information to user ends in a region corresponding to the LEO constellation;
wherein the ionospheric delay is obtained by using the following equation:

$$I_{r,j}^s = \rho_{r,g}^s - L_{r,j}^s + T_r^s + \lambda_j \left( f_{r,j} - f_j^s + N_{r,j}^s \right) + \varepsilon_{r,j}^s$$

where, $I_{r,j}^s$ represents the ionospheric delay at a frequency, $\rho_{r,g}^s$ represents a distance between a satellite and a user end where the distance has been corrected for an antenna phase center, an antenna phase center variation, an earth rotation and a relativistic effect, $L_{r,j}^s$ represents a carrier phase observation value, $T_r^s$ represents a tropospheric delay, $\lambda_j$ represents a wavelength of an electromagnetic wave $j$, $f_{r,j}$ represents a carrier phase hardware deviation of a receiver, $f_j^s$ represents a carrier phase hardware deviation of a satellite, $N_{r,j}^s$ represents an ambiguity, and $\varepsilon_{r,j}^s$ represents a carrier phase measurement error.

**7.** The "cloud-end" architecture-based PPP-RTK augmentation system according to claim 6, wherein the tropospheric delay is acquired by the following equation

$$T_i^k = L_{3i}^k - \rho_{i,g}^k - \lambda_j \left( f_{r,j} - f_j^s + N_{r,j}^s \right) - \varepsilon_{r,j}^s$$

where, $T_i^k$ represents the tropospheric delay, $L_{3i}^k$ represents a dual-frequency ionosphere-free carrier phase observation value, $\rho_{r,g}^s$ represents a distance between a satellite and a user end where the distance has been corrected for an antenna phase center, an antenna phase center variation, an earth rotation and a relativistic effect, $\lambda_j$ represents a wavelength of an electromagnetic wave $j$, $f_{r,j}$ represents a carrier phase hardware deviation of a receiver, $f_j^s$ represents a carrier phase hardware deviation of a satellite, $N_{r,j}^s$ represents an ambiguity, and $\varepsilon_{r,j}^s$ represents a carrier phase measurement error.

**8.** The "cloud-end" architecture-based PPP-RTK augmentation system according to claim 6, wherein the cloud service platform performs interpolation based on the large amount of space correction information to generate the gridded space correction information by:

calculating an interpolation coefficient by using the following equations:

$$\sum_{i=1}^n \alpha_i = 1, \sum_{i=1}^n \alpha_i (\hat{X}_u - \hat{X}_i) = 0, \sum_{i=1}^n \alpha_i^2 = Min$$

where, $n$ represents the number of user ends, $\alpha_i$ represents the interpolation coefficient, a subscript $u$ represents a user point before gridding, a subscript $i$ represents the user point after gridding, and $X$ represents a coordinate in a local plane coordinate system.

**Patentansprüche**

**1.** "Cloud-End"-Architektur basiertes präzises Punktpositionierungs-Echtzeitkinematik-(Precise Point Positioning - Real Time Kinematic) PPP-RTK-Augmentationsverfahren, umfassend:

Schritt (1), Durchführen, durch ein Benutzerende unter einer großen Anzahl von Benutzerenden auf der ganzen Welt basierend auf einem Satellitennavigationssystem, einer Punktpositionierung, und Erhalten, durch das Benutzerende, nachdem die Punktpositionierung konvergiert ist, von Informationen über die Position des Benutzerendes und einer ionosphärischen Verzögerung und einer troposphärischen Verzögerung, die der Position entsprechen;
Schritt (2), Hochladen, durch das Benutzerende unter der großen Anzahl von Benutzerenden über einen Kommunikationslink, der Informationen über die Position des Benutzerendes, und der ionosphärischen Verzögerung und der troposphärischen Verzögerung, die der Position entsprechen, in eine "Cloud" als Raumkorrekturinformationen;
Schritt (3), Durchführen, durch die "Cloud" basierend auf den Raumkorrekturinformationen von der großen Anzahl von Benutzerenden, einer Interpolation, um gerasterte Raumkorrekturinformationen zu erzeugen;
Schritt (4), Ausstrahlen, durch die "Cloud" unter Verwendung eines LEO- (Low Earth Orbit) -Satelliten, der gerasterten Raumkorrekturinformationen, die durch die "Cloud" erzeugt werden, an Benutzerenden in einem Gebiet, das dem LEO-Satelliten entspricht;

Schritt (5), Aktualisieren, durch das Benutzerende unter der großen Anzahl von Benutzerenden basierend auf den ausgestrahlten Raumkorrekturinformationen, von Informationen über die Position des Benutzerendes, und Hochladen, durch das Benutzerende, nachdem die Punktpositionierung konvergiert ist, der aktualisierten Raumkorrekturinformationen der Position in die "Cloud" über einen Kommunikationslink; und

Schritt (6), Wiederholen der Schritte (3) bis (5), um hochpräzise gerasterte Korrekturinformationen in der "Cloud" durch intelligente Entwicklung basierend auf der großen Anzahl von Benutzerenden zu erreichen;

wobei die ionosphärische Verzögerung durch Verwendung der folgenden Gleichung erhalten wird:

$$I_{r,j}^s = \rho_{r,g}^s - L_{r,j}^s + T_r^s + \lambda_j(f_{r,j} - f_j^s + N_{r,j}^s) + \varepsilon_{r,j}^s$$

wobei $I_{r,j}^s$ die ionosphärische Verzögerung bei einer Frequenz darstellt, $\rho_{r,g}^s$ einen Abstand zwischen einem Satelliten und einem Benutzerende darstellt, wobei der Abstand für ein Antennenphasenzentrum, einen Variationswert des Antennenphasenzentrums, eine Erddrehung und einen relativistischen Effekt korrigiert wurde, $L_{r,j}^s$ einen Trägerphasen-Beobachtungswert darstellt, $T_r^s$ eine troposphärische Verzögerung darstellt, $\lambda_j$ eine Wellenlänge einer elektromagnetischen Welle j darstellt, $f_{r,j}$ eine Trägerphasen-Hardwareabweichung eines Empfängers darstellt, $f_j^s$ eine Trägerphasen-Hardwareabweichung des Satelliten darstellt, $N_{r,j}^s$ eine Mehrdeutigkeit darstellt, und $\varepsilon_{r,j}^s$ einen Trägerphasen-Messfehler darstellt.

2. "Cloud-End"-Architektur-basiertes PPP-RTK-Augmentationsverfahren nach Anspruch 1, wobei die troposphärische Verzögerung durch Verwendung der folgenden Gleichung erhalten wird:

$$T_i^k = L_{3i}^k - \rho_{i,g}^k - \lambda_j(f_{r,j} - f_j^s + N_{r,j}^s) - \varepsilon_{r,j}^s$$

wobei $T_i^k$ die troposphärische Verzögerung darstellt, $L_{3i}^k$ einen ZweifrequenzIonosphären-freien Trägerphasen-Beobachtungswert darstellt, $\rho_{r,g}^s$ einen Abstand zwischen einem Satelliten und einem Benutzerende darstellt, wobei der Abstand um ein Antennenphasenzentrum, eine Variation des Antennenphasenzentrums, eine Erddrehung und einen relativistischen Effekt korrigiert wurde, $\lambda_j$ eine Wellenlänge einer elektromagnetischen Welle *j darstellt, f*$_{r,j}$ eine Trägerphasen-Hardwareabweichung eines Empfängers darstellt, $f_j^s$ eine Trägerphasen-Hardwareabweichung des Satelliten darstellt, $N_{r,j}^s$ eine Mehrdeutigkeit darstellt, und $\varepsilon_{r,j}^s$ einen Trägerphasen-Messfehler darstellt.

3. "Cloud-End"-Architektur-basiertes PPP-RTK-Augmentationsverfahren nach Anspruch 1, wobei das Durchführen, durch die "Cloud", der Interpolation zum Erzeugen von gerasterten Raumkorrekturinformationen Folgendes umfasst:

Berechnen eines Interpolationskoeffizienten unter Verwendung der folgenden Gleichungen:

$$\sum_{i=1}^n \alpha_i = 1, \sum_{i=1}^n \alpha_i(\hat{X}_u - \hat{X}_i) = 0, \sum_{i=1}^n \alpha_i^2 = Min$$

wobei n die Anzahl der Benutzerenden darstellt, $\alpha_i$ den Interpolationskoeffizienten darstellt, ein tiefgestellter Index *u* einen Benutzerpunkt vor dem Rastern darstellt, ein tiefgestellter Index *i* den Benutzerpunkt nach dem Rastern darstellt, und X eine Koordinate in einem lokalen ebenen Koordinatensystem darstellt.

4. "Cloud-End"-Architektur-basiertes PPP-RTK-Augmentationsverfahren nach Anspruch 1, wobei die "Cloud" eine Cloud-Plattform ist, die für die Dateninterverbindung und Dateninterkommunikation konstruiert ist und eine LEO-Konstellation, eine Navigationskonstellation und ein Bodenverarbeitungssystem umfasst.

5. "Cloud-End"-Architektur-basiertes PPP-RTK-Augmentationsverfahren nach Anspruch 1, wobei der Kommunikationslink in Schritt (2) ein Satellitenkommunikationslink, ein globaler Kurznachrichtenlink oder ein terrestrischer Netzwerklink ist.

6. "Cloud-End"-Architektur-basiertes PPP-RTK-Augmentationssystem, umfassend ein Benutzerende, eine LEO-Konstellation, eine Navigationskonstellation und eine Cloud-Service-Plattform, wobei

das Benutzerende konfiguriert ist zum: Durchführen einer Punktpositionierung unter Verwendung der Navigationskonstellation; Erhalten von Informationen über eine Position des Benutzerendes und eine ionosphärische Verzögerung und eine troposphärische Verzögerung entsprechend der Position; Übertragen der Informationen über die Position, die ionosphärische Verzögerung und die troposphärische Verzögerung an die Cloud-Service-Plattform; Aktualisieren der Informationen über die Position des Benutzerendes basierend auf aktualisierten Raumkorrekturinformationen; und Erhalten von Raumkorrekturinformationen, die einer neuen Position entsprechen, und Hochladen von Raumkorrekturinformationen in die Cloud-Service-Plattform; und

die Cloud-Service-Plattform konfiguriert ist zum: Durchführen einer Interpolation basierend auf einer großen Menge an Raumkorrekturinformationen, um gerasterte Raumkorrekturinformationen zu erzeugen, und Ausstrahlen, unter Verwendung der LEO-Konstellation, der gerasterten Raumkorrekturinformationen an Benutzerenden in einem Gebiet, das der LEO-Konstellation entspricht;

wobei die ionosphärische Verzögerung durch Verwendung der folgenden Gleichung erhalten wird:

$$I_{r,j}^{s} = \rho_{r,g}^{s} - L_{r,j}^{s} + T_r^{s} + \lambda_j ( f_{r,j} - f_j^{s} + N_{r,j}^{s} ) + \varepsilon_{r,j}^{s}$$

wobei $I_{r,j}^{s}$ die ionosphärische Verzögerung bei einer Frequenz darstellt, $\rho_{r,g}^{s}$ einen Abstand zwischen einem Satelliten und einem Benutzerende darstellt, wobei der Abstand um ein Antennenphasenzentrum, eine Variation des Antennenphasenzentrums, eine Erddrehung und einen relativistischen Effekt korrigiert wurde, $L_{r,j}^{s}$ einen Trägerphasen-Beobachtungswert darstellt, $T_r^{s}$ eine troposphärische Verzögerung darstellt, $\lambda_j$ eine Wellenlänge einer elektromagnetischen Welle j darstellt, $f_{r,j}$ eine Trägerphasen-Hardwareabweichung eines Empfängers darstellt, $f_j^{s}$ eine Trägerphasen-Hardwareabweichung eines Satelliten darstellt, $N_{r,j}^{s}$ eine Mehrdeutigkeit darstellt, und $\varepsilon_{r,j}^{s}$ einen Trägerphasen-Messfehler darstellt.

7. "Cloud-End"-Architektur-basiertes PPP-RTK-Augmentationssystem nach Anspruch 6, wobei die troposphärische Verzögerung durch die folgende Gleichung erfasst wird

$$T_i^{k} = L_{3i}^{k} - \rho_{i,g}^{k} - \lambda_j \left( f_{r,j} - f_j^{s} + N_{r,j}^{s} \right) - \varepsilon_{r,j}^{s}$$

wobei $T_i^{k}$ die troposphärische Verzögerung darstellt, $L_{3i}^{k}$ einen Zweifrequenzlonosphären-freien Trägerphasen-Beobachtungswert darstellt, $\rho_{r,g}^{s}$ einen Abstand zwischen einem Satelliten und einem Benutzerende darstellt, wobei der Abstand um ein Antennenphasenzentrum, eine Variation des Antennenphasenzentrums, eine Erddrehung und einen relativistischen Effekt korrigiert wurde, $\lambda_j$ eine Wellenlänge einer elektromagnetischen Welle *j darstellt, $f_{r,j}$* eine Trägerphasen-Hardwareabweichung eines Empfängers darstellt, $f_j^{s}$ eine Trägerphasen-Hardwareabweichung eines Satelliten darstellt, $N_{r,j}^{s}$ eine Mehrdeutigkeit darstellt und $\varepsilon_{r,j}^{s}$ einen Trägerphasen-Messfehler darstellt.

8. "Cloud-End"-Architektur-basiertes PPP-RTK-Augmentationssystem nach Anspruch 6, wobei die Cloud-Service-Plattform basierend auf der großen Menge an Raumkorrekturinformationen eine Interpolation durchführt, um die gerasterten Raumkorrekturinformationen zu erzeugen, durch:

Berechnen eines Interpolationskoeffizienten unter Verwendung der folgenden Gleichungen:

$$\sum_{i=1}^{n} \alpha_i = 1, \sum_{i=1}^{n} \alpha_i (\hat{X}_u - \hat{X}_i) = 0, \sum_{i=1}^{n} \alpha_i^2 = Min$$

wobei *n* die Anzahl der Benutzerenden darstellt, $\alpha_i$ den Interpolationskoeffizienten darstellt, ein tiefgestellter Index *u* einen Benutzerpunkt vor dem Rastern darstellt, ein tiefgestellter Index *i* den Benutzerpunkt nach dem Rastern darstellt, und *X* eine Koordinate in einem lokalen ebenen Koordinatensystem darstellt.

## Revendications

1. Procédé d'augmentation de positionnement de point précis - cinématique en temps réel PPP-RTK basé sur une architecture "côté nuage", comprenant :

étape (1), la mise en œuvre, par un côté utilisateur parmi un grand nombre de côtés utilisateur dans le monde entier sur la base d'un système de navigation par satellite, un positionnement de point, et l'obtention, par le côté utilisateur après que le positionnement de point a convergé, des informations concernant la position du côté utilisateur, et d'un délai ionosphérique et d'un délai troposphérique correspondant à la position ;

étape (2), le téléchargement, par le côté utilisateur parmi le grand nombre de côtés utilisateur via une liaison de communication, des informations concernant la position du côté utilisateur, et du délai ionosphérique et du délai troposphérique correspondant à la position vers un "nuage" en tant qu'informations de correction spatiale ;

étape (3), la mise en œuvre, par le "nuage" sur la base des informations de correction spatiale provenant du grand nombre de côtés utilisateur, d'une interpolation afin de générer des informations de correction spatiale quadrillées ;

étape (4), la diffusion, par le "nuage" en utilisant un satellite LEO (orbite terrestre basse), des informations de correction spatiale quadrillées générées par le "nuage" aux côtés utilisateur dans une région correspondant au satellite LEO ;

étape (5), la mise à jour, par le côté utilisateur parmi le grand nombre de côtés utilisateur sur la base des informations de correction spatiale diffusées, d'informations concernant la position du côté utilisateur, et le téléchargement, par le côté utilisateur, après que le positionnement de point a convergé, des informations de correction spatiale mises à jour vers le "nuage" via une liaison de communication ; et

étape (6), la répétition des étapes (3) à (5), pour atteindre des informations de correction quadrillées de haute précision au niveau du "nuage" par le biais d'une évolution intelligente sur la base du grand nombre de côtés utilisateur ;

dans lequel le délai ionosphérique est obtenu en utilisant l'équation suivante :

$$I^{s}_{r,j} = \rho^{s}_{r,g} - L^{s}_{r,j} + T^{s}_{r} + \lambda_j \left( f_{r,j} - f^{s}_{j} + N^{s}_{r,j} \right) + \varepsilon^{s}_{r,j}$$

où, $I^{s}_{r,j}$ représente le délai ionosphérique à une fréquence, $\rho^{s}_{r,g}$ représente une distance entre un satellite et un côté utilisateur où la distance a été corrigée pour un centre de phase d'antenne, une valeur de variation de centre de phase d'antenne, une rotation terrestre et un effet relativiste,

$L^{s}_{r,j}$ représente une valeur d'observation de phase de porteuse, $T^{s}_{r}$ représente un délai troposphérique, $\lambda_j$ représente une longueur d'onde d'une onde électromagnétique j, $f_{r,j}$ représente un écart de matériel de phase de porteuse d'un récepteur, $f^{s}_{j}$ représente un écart de matériel de phase de porteuse du satellite, $N^{s}_{r,j}$ représente une ambiguïté, et $\varepsilon^{s}_{r,j}$ représente une erreur de mesure de phase de porteuse.

**2.** Procédé d'augmentation de PPP-RTK basé sur une architecture "côté nuage" selon la revendication 1, dans lequel le délai troposphérique est obtenu en utilisant l'équation suivante :

$$T^{k}_{i} = L^{k}_{3i} - \rho^{k}_{i,g} - \lambda_j \left( f_{r,j} - f^{s}_{j} + N^{s}_{r,j} \right) - \varepsilon^{s}_{r,j}$$

où, $T^{k}_{i}$ représente le délai troposphérique, $L^{k}_{3i}$ représente une valeur d'observation de phase de porteuse sans ionosphère double-fréquence, $\rho^{s}_{r,g}$ représente une distance entre un satellite et un côté utilisateur où la distance a été corrigée pour un centre de phase d'antenne, une variation de centre de phase d'antenne, une rotation terrestre et un effet relativiste, $\lambda_j$ représente une longueur d'onde d'une onde électromagnétique j, $f_{r,j}$ représente un écart de matériel de phase de porteuse d'un récepteur, $f^{s}_{j}$ représente un écart de matériel de phase de porteuse du satellite, $N^{s}_{r,j}$ représente une ambiguïté, et $\varepsilon^{s}_{r,j}$ représente une erreur de mesure de phase de porteuse.

**3.** Procédé d'augmentation de PPP-RTK basé sur une architecture "côté nuage" selon la revendication 1, dans lequel la mise en œuvre, par le "nuage", d'une interpolation afin de générer des informations de correction spatiale quadrillées comprend :

le calcul d'un coefficient d'interpolation en utilisant les équations suivantes :

$$\sum_{i=1}^{n} \alpha_i = 1, \sum_{i=1}^{n} \alpha_i (\hat{X}_u - \hat{X}_i) = 0, \sum_{i=1}^{n} \alpha_i^2 = Min$$

où, n représente le nombre des côtés utilisateur, $\alpha_i$ représente le coefficient d'interpolation, un indice u représente un point utilisateur avant quadrillage, un indice i représente le point utilisateur après quadrillage, et X représente une coordonnée dans un système de coordonnées de plan local.

4. Procédé d'augmentation de PPP-RTK basé sur une architecture "côté nuage" selon la revendication 1, dans lequel le "nuage" est une plateforme en nuage qui est construite pour une interconnexion de données et une intercommunication de données et comprend une constellation LEO, une constellation de navigation et un système de traitement au sol.

5. Procédé d'augmentation de PPP-RTK basé sur une architecture "côté nuage" selon la revendication 1, dans lequel la liaison de communication à l'étape (2) est une liaison de communication par satellite, une liaison par message court globale ou une liaison par réseau terrestre.

6. Système d'augmentation de PPP-RTK basée sur une architecture "côté nuage", comprenant un côté utilisateur, une constellation LEO, une constellation de navigation et une plateforme de service en nuage, dans lequel

le côté utilisateur est configuré pour : mettre en œuvre un positionnement de point en utilisant la constellation de navigation ; obtenir des informations concernant une position du côté utilisateur, et un délai ionosphérique et un délai troposphérique correspondant à la position ; transmettre les informations concernant la position, le délai ionosphérique et le délai troposphérique à la plateforme de service en nuage ; mettre à jour les informations concernant la position du côté utilisateur sur la base d'informations de correction spatiale mises à jour ; et obtenir des informations de correction spatiale correspondant à une nouvelle position, et télécharger les informations de correction spatiale vers la plateforme de service en nuage ; et
la plateforme de service en nuage est configurée pour : mettre en œuvre une interpolation sur la base d'une grande quantité d'informations de correction spatiale afin de générer des informations de correction spatiale quadrillées, et diffuser, en utilisant la constellation LEO, les informations de correction spatiale quadrillées vers des côtés utilisateur dans une région correspondant à la constellation LEO ;
dans lequel le délai ionosphérique est obtenu en utilisant l'équation suivante :

$$I_{r,j}^{s} = \rho_{r,g}^{s} - L_{r,j}^{s} + T_{r}^{s} + \lambda_{j}\left(f_{r,j} - f_{j}^{s} + N_{r,j}^{s}\right) + \varepsilon_{r,j}^{s}$$

où, $I_{r,j}^{s}$ représente le délai ionosphérique à une fréquence, $\rho_{r,g}^{s}$ représente une distance entre un satellite et un côté utilisateur où la distance a été corrigée pour un centre de phase d'antenne, une variation de centre de phase d'antenne, une rotation terrestre et un effet relativiste, $L_{r,f}^{s}$ représente une valeur d'observation de phase de porteuse, $T_{r}^{s}$ représente un délai troposphérique, $\lambda_{j}$ représente une longueur d'onde d'une onde électromagnétique j, $f_{r,j}$ représente un écart de matériel de phase de porteuse d'un récepteur, $f_{j}^{s}$ représente un écart de matériel de phase de porteuse d'un satellite, $N_{r,j}^{s}$ représente une ambiguïté, et $\varepsilon_{r,j}^{s}$ représente une erreur de mesure de phase de porteuse.

7. Système d'augmentation de PPP-RTK basée sur une architecture "côté nuage" selon la revendication 6, dans lequel le délai troposphérique est acquis par l'équation suivante

$$T_{i}^{k} = L_{3i}^{k} - \rho_{i,g}^{k} - \lambda_{j}\left(f_{r,j} - f_{j}^{s} + N_{r,j}^{s}\right) - \varepsilon_{r,j}^{s}$$

où, $T_{i}^{k}$ représente le délai troposphérique, $L_{3i}^{k}$ représente une valeur d'observation de phase de porteuse sans ionosphère double-fréquence, $\rho_{r,g}^{s}$ représente une distance entre un satellite et un côté utilisateur où la distance a été corrigée pour un centre de phase d'antenne, une variation de centre de phase d'antenne, une rotation terrestre et un effet relativiste, $\lambda_{j}$ représente une longueur d'onde d'une onde électromagnétique j, $f_{r,j}$ représente un écart de matériel de phase de porteuse d'un récepteur, $f_{j}^{s}$ représente un écart de matériel de phase de porteuse d'un satellite, $N_{r,j}^{s}$ représente une ambiguïté, et $\varepsilon_{r,j}^{s}$ représente une erreur de mesure de phase de porteuse.

8. Système d'augmentation de PPP-RTK basée sur une architecture "côté nuage" selon la revendication 6, dans lequel la plateforme de service en nuage met en œuvre une interpolation sur la base de la grande quantité d'informations de correction spatiale afin de générer les informations de correction spatiale quadrillées en :

calculant un coefficient d'interpolation en utilisant les équations suivantes :

$$\sum_{i=1}^{n} \alpha_i = 1, \sum_{i=1}^{n} \alpha_i (\hat{X}_u - \hat{X}_i) = 0, \sum_{i=1}^{n} \alpha_i^2 = Min$$

où, n représente le nombre des côtés utilisateur, $\alpha_i$ représente le coefficient d'interpolation, un indice u représente un point utilisateur avant quadrillage, un indice $i$ représente le point utilisateur après quadrillage, et X représente une coordonnée dans un système de coordonnées de plan local.

**Figure 1**

EP 4 060 384 B1

Intelligently evaluated PPP-RTK service system

| | | |
|---|---|---|
| A large number of users around the world perform PPP based on BeiDou/GNSS | After positions of the large number of users are conver -ged, the large number of users generate space correc -tion information based on the positions of the users | The users upload the generated space correction information to the "cloud" |

| | | |
|---|---|---|
| Based on the broadcasted correction information, the users perform PPP instantaneous convergence using BeiDou/GNSS and generate space correction information based on the positions of the users | | The "cloud" intelligently processes the space correction information from the large number of users and broadcasts the space correction information to the users by using a low-orbit satellite |

**Figure 2**

"Cloud" original data                "Cloud" generated data

**Figure 3**

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911329284

- US 20170307761 A1